**Europäisches Patentamt**

**European Patent Office**

**Office européen des brevets**

(19)

(11) Veröffentlichungsnummer : **0 677 548 A1**

# (12) EUROPÄISCHE PATENTANMELDUNG

(21) Anmeldenummer : **95890076.3**

(22) Anmeldetag : **07.04.95**

(51) Int. Cl.$^6$ : **C08K 5/10,** C08L 21/00, B60C 1/00

(30) Priorität : **14.04.94 AT 772/94**

(43) Veröffentlichungstag der Anmeldung : **18.10.95 Patentblatt 95/42**

(84) Benannte Vertragsstaaten : **AT CH DE DK FR GB IT LI LU SE**

(71) Anmelder : **Semperit Reifen Aktiengesellschaft Wienersdorferstrasse 20-24 A-2514 Traiskirchen (AT)**

(72) Erfinder : **Beckmann, Otto, Dr. Kapellengasse 5/1/5/21 A-2514 Traiskirchen (AT)** Erfinder : **Söhnen, Dietmar, Dr. Ahornstrasse 22 D-52074 Aachen (DE)** Erfinder : **Du Bois, André, Dr. Burgwedeler Strasse 25 D-30657 Hannover (DE)** Erfinder : **Dumke, Joachim Oelerser Strasse 8 D-31275 Lehrte (DE)**

(74) Vertreter : **Vinazzer, Edith Semperit Reifen Aktiengesellschaft Patentabteilung Wienersdorferstrasse 20-24 A-2514 Traiskirchen (AT)**

(54) **Kautschukmischung.**

(57) Die Erfindung betrifft eine Kautschukmischung für den Laufstreifen eines Reifens auf der Basis zumindest eines Polymers A aus der Gruppe der Homopolymere und zumindest eines Polymers B aus der Gruppe der Copolymere basierend auf konjugiertem Dien und aromatischer Vinylverbindung, enthaltend feinverteilte, gefällte Kieselsäure als Füllmaterial, gegebenenfalls Ruß und ferner Weichmacher. Im Weichmacheranteil ist zumindest ein Weichmacher aus der Gruppe der Tieftemperatur-Weichmacher vom Estertyp enthalten.

EP 0 677 548 A1

Die vorliegende Erfindung betrifft eine Kautschukmischung für den Laufstreifen eines Reifens auf der Basis zumindest eines Polymers A aus der Gruppe der Homopolymere und zumindest eines Polymers B aus der Gruppe der Copolymere basierend auf konjugiertem Dien und aromatischer Vinylverbindung, enthaltend feinverteilte, gefällte Kieselsäure als Füllmaterial, gegebenenfalls Ruß und ferner Weichmacher. Die Erfindung betrifft ferner einen Reifen mit einem Laufstreifen, der zumindest zum Teil aus dieser Kautschukmischung hergestellt ist.

Die Senkung des Rollwiderstandes von Reifen, die mit einer Verminderung des Kraftstoffverbrauches einhergeht, steht bei der Reifenentwicklung und Reifenherstellung in jüngster Vergangenheit im Vordergrund.

Kautschukmischungen für Laufstreifen, die dazu beitragen, den Rollwiderstand von Reifen zu senken, sollen idealerweise keine Verschlechterung anderer Reifeneigenschaften, beispielsweise im Naßgriff oder im Abrieb, bewirken. Dabei ist allgemein bekannt, daß im Rollwiderstand erzielbare Verbesserungen je nach Art der gewählten Maßnahme entweder zu Lasten des Abriebs oder zu Lasten des Naßgriffes gehen.

Um eine Verminderung des Rollwiderstandes und eine gute Haftung bei Nässe zu erzielen, ist bereits vorgeschlagen worden, Kautschukmischungen für Reifenlaufstreifen zu verwenden, die einen Styrolbutadienkautschuk (SBR) gegebenenfalls in Kombination mit wenigstens einem anderen Dienelastomer und fein verteilter gefällter Kieselsäure als verstärkendem Füllstoff enthält. Die Kieselsäure wird dabei entweder allein oder in Kombination mit Ruß verwendet. Zum Thema Einsatz von Kieselsäure in Kautschukmischungen ist bereits eine Anzahl von Lösungen vorgeschlagen worden. So ist beispielsweise aus der EP-A 0501227 eine Kautschukmischung für den Laufstreifen eines Reifens bekannt, deren Kautschukkomponente ein lösungspolymerisiertes Styrolbutadiencopolymer sowie Kieselsäure enthält. Ein ähnlicher Vorschlag ist aus der EP-A 0447066 bekannt, wo eine Laufstreifenmischung für einen Reifen auf der Basis eines Polymers mit einer Glasübergangstemperatur größer -50°C, welches auch ein lösungspolymerisiertes Styrolbutadiencopolymer sein kann, gegebenenfalls in Verschnitt mit anderen Polymeren unter Einsatz einer mit Silan behandelten Kieselsäure geoffenbart ist.

Grundsätzlich läßt sich feststellen, daß Reifen mit Laufstreifen aus sogenannten Silica-Mischungen einen geringeren Rollwiderstand aufweisen, im Naßgriff verbessert sind und gegenüber Reifen mit herkömmlichen Laufstreifenmischungen (ohne Kieselsäure) auch eine etwas bessere Schneetraktion aufweisen können.

Es hat sich nun herausgestellt, daß vorrangig für den Wintereinsatz vorgesehene Reifen, deren Laufstreifen aus derartigen Kautschukmischungen bestehen, jedoch nicht die Wintereigenschaften aufweisen, insbesondere was Schneetraktion, Eistraktion und Bremseigenschaften auf schneeigem und eisigem Untergrund betrifft, die erwünscht sind.

Die Erfindung hat sich daher die Aufgabe gestellt, eine Kautschukmischung für den Laufstreifen eines Reifens, der insbesondere für den Einsatz unter winterlichen Fahrbedingungen geeignet ist, diesbezüglich zu verbessern.

Gelöst wird die gestellte Aufgabe erfindungsgemäß dadurch, daß im Weichmacheranteil zumindest ein Weichmacher aus der Gruppe der Tieftemperatur-Weichmacher vom Estertyp enthalten ist.

Es zeigte sich, daß der Einsatz bzw. die Verwendung eines Esterweichmachers in einer ein Kieselsäuregranulat enthaltenden Lautstreifenmischungen signifikante Verbesserungen in den Wintereigenschaften mit sich bringt. Die Ursache für diese Verbesserung dürften synergistische Effekte, voraussichtlich eine optimale Wechselwirkung zwischen Kieselsäure und Esterweichmacher, sein. Reifen mit einem Laufstreifen aus der erfindungsgemäßen Kautschukmischung weisen die Vorteile von mit Kieselsäure gefüllten Laufstreifenmischungen, also verringerten Rollwiderstand und guten Naßgriff auf, darüberhinaus wird eine signifikante Verbesserung im Schneegriff, dem Traktionsverhalten auf Schnee und Eis, Eisgriff beim Bremsen und dem Bremsverhalten auf schneeigem Untergrund erzielt.

In der erfindungsgemäßen Kautschukmischung beträgt der Gesamtanteil an Weichmacher zwischen 10 und 45 Gewichtsteile, bezogen auf 100 Gewichtsteile Kautschuk in der Mischung, wobei der Anteil an Weichmacher aus der Gruppe der Weichmacher vom Estertyp insbesondere 3 bis 35 Gewichtsteile beträgt. Der Weichmacher vom Estertyp wird vorzugsweise gemeinsam mit einem Weichmacher aus der Gruppe der aromatischen Mineralöle eingesetzt. Als besonders vorteilhaft haben sich Mineralöle aus dieser Gruppe erwiesen, da hier anscheinend ein optimales Zusammenwirken zwischen dem eingesetzten Mineralöl und dem Ester-Weichmacher erfolgt.

Bei einer bevorzugten Ausführungsform der Erfindung werden in der Kautschukmischung als Tieftemperatur-Welchmacher vom Estertyp natürliche Triglyceride pflanzlichen oder tierischen Ursprungs mit einer Jodzahl >80 eingesetzt. Das Triglycerid kann somit vorteilhafterweise von in der Natur vorkommenden und umweltfreundlichen Ölen, insbesondere von Rapsöl oder von Rizinusöl stammen. Dabei wird Rizinusöl in einem Anteil von bis zu 10 Gewichtsteilen, bezogen auf 100 Gewichtsteile Kautschuk in der Mischung, eingesetzt.

Gut geeignet sind ferner jene Weichmacher vom Estertyp, die auf natürlich vorkommenden Fettsäuren oder Gemischen aus solchen und aliphatischen Alkoholen basieren. Aus dieser Gruppe kommen vor allem sol-

2

che Ester in Frage, deren Säurekomponente entweder Ölsäure ist oder ein Gemisch aus natürlich vorkommenden Fettsäuren wie Rapsölfettsäure, Sojaölfettsäure oder Tallölfettsäure.

In einer Kautschukmischung nach der Erfindung sind auch Weichmacher einsetzbar, die auf synthetischen Säuren oder Gemischen aus solchen und aliphatischen Alkoholen basieren. Besonders bevorzugt sind dabei Ester, deren Säurekomponente synthetische Monocarbonsäure, insbesondere 2-Ethylhexancarbonsäure oder Benzeosäure, ferner Dicarbonsäuren, wie insbesondere Bernsteinsäure, Glutarsäure, Adipinsäure und Sebacinsäure, sowie Tri- und Polycarbonsäuren, insbesondere Zitronensäure, ist.

Die Alkoholkomponente der im Rahmen der vorliegenden Erfindung einsetzbaren Weichmacher vom Estertyp, und zwar sowohl bei solchen, deren Säurekomponente natürlich vorkommende Fettsäuren als auch solche, deren Säurekomponente synthetische Säuren umfaßt, kann aus aliphatischen Alkoholen mit nur einer OH-Gruppe, insbesondere primäre unverzweigte Alkohole mit 1 bis 12 Kohlenstoffatomen bestehen. Auch Ester mit einer Alkoholkomponente aus aliphatischen Alkoholen mit zwei OH-Gruppen, beispielsweise Ethylenglycol, Diethylenglycol, Triethylenglycol, Tetraethylenglycol sowie Neopentylglycol und 1,4-Butandiol sind gut einsetzbar. Dabei kann ferner die aliphatische Alkoholkomponente auch Alkohole mit drei OH-Gruppen umfassen, insbesondere Trimethylenpropan oder Glycerin. Zur Gruppe der gut einsetzbaren Weichmacher vom Estertyp gehören hier auch jene, deren Alkoholkomponente Polyole umfaßt, insbesondere Pentaerythrit oder Dipentaerythrit.

Schließlich kommen bevorzugt noch Weichmacher auf Basis des Estertyps in Frage, die auf Dicarbonsäure mit Diolen basieren.

In der Kautschukmischung nach der vorliegenden Erfindung beträgt der Anteil der Polymere A 20 bis 80 Gewichtsteile und der Anteil der Polymere B 80 bis 20 Gewichtsteile, jeweils bezogen auf 100 Gewichtsteile Kautschuk in der Mischung.

Die erfindungsgemäß eingesetzten Polymere A aus der Gruppe der Homopolymere werden bevorzugt ausgewählt aus Naturkautschuk, synthetischem Polyisopren und Butadienkautschuk mit einem Vinylanteil < 30 %.

Die erfindungsgemäß eingesetzten Polymere B aus der Gruppe der Copolymere basierend auf konjugiertem Dien und aromatischer Vinylverbindung umfassen solche, bei denen das eingesetzte konjugierte Dien 1,3-Butadien oder Isopren oder ein Gemisch aus beiden ist.

Die erfindungsgemäß eingesetzte aromatische Vinylverbindung ist dabei bevorzugt Styrol oder α-Methylstyrol oder ein Gemisch aus beiden.

Dabei werden vorteilhafterweise solche Polymere ausgewählt, bei denen das molare Verhältnis von konjugiertem Dien zur aromatischen Vinylverbindung 95 : 5 bis 45 : 55, vorzugsweise 90 : 10 bis 55 : 45 beträgt.

Dabei können ferner bei einer Kautschukmischung nach der Erfindung Copolymere eingesetzt werden, die entweder Emulsions-Polymerisate sind und demnach aus wäßrigen Emulsionen hergestellt sind, oder Lösungs-Polymerisate sind, die demnach aus Kohlenwasserstofflösungen hergestellt sind.

Es hat sich ferner im Rahmen der vorliegenden Erfindung herausgestellt, daß die Verwendung zweier unterschiedlicher Polymere vom Typ B besonders vorteilhaft ist und die gewünschten Wintereigenschaften besonders günstig beeinflußt. In diesem Zusammenhang ist es von Vorteil, wenn zwei Copolymere, die beide Lösungspolymerisate sind, verwendet werden oder ein Verschnitt eines Emulsionspolymerisats mit einem Lösungspolymerisat eingesetzt wird.

Im Rahmen der vorliegenden Erfindung kann grundsätzlich jede feinverteilte, gefällte Kieselsäure eingesetzt werden, wie sie üblicherweise bei der Herstellung von Kautschukmischungen verwendet wird. In diesem Zusammenhang wird beispielsweise auf die in der EP-A 0501227, der EP-A 0157703 und der DE-A 2410014 beschriebenen Kieselsäuren verwiesen. Allgemein können demnach gefällte und feinverteilte Kieselsäuren als Füllstoff in der erfindungsgemäßen Kautschukmischung eingesetzt werden, die eine BET-Fläche von 40 bis 350 m²/g, insbesondere von 100 bis 250 m²/g, eine CTAB-Fläche von 50 bis 350 m²/g, vorzugsweise von 100 bis 250 m²/g und einen mittleren Teilchendurchmesser von 10 bis 150 μm, vorzugsweise 10 bis 100 μm und eine DBP-Absorption von 50 bis 350 ml/100 g, vorzugsweise 150 bis 250 ml/100g besitzen.

Die Kieselsäure kann zusammen mit einem Silankupplungsmittel eingesetzt werden, wobei bevorzugt im Rahmen der Erfindung schwefelhaltige Silane verwendet werden. Als besonders geeignet haben sich dabei Silane herausgestellt, die ausgewählt werden aus Bis (3-triethoxylsilylpropyl)-tetrasulfid (mit Ruß im Verhältnis 1 : 1 vermischt als Handelsprodukt X50S der Firma Degussa allgemein bekannt), 3-Mercaptopropyltriethoxisilan und 3-Thiocyanatopropyltrimethoxysilan.

Das Silankupplungsmittel wird in einer Menge von 0,2 bis 10 Gewichtsteilen, vorzugsweise 0,5 bis 7 Gewichtsteilen, bezogen auf 100 Gewichtsteile Kautschuk in der Mischung, eingesetzt. Die Reaktion zwischen der Kieselsäure und dem Silankupplungsmittel kann während der Herstellung der Mischung oder alternativ dazu außerhalb durchgeführt werden. Letzteres führt zu einer vorbehandelten Kieselsäure, die als solche der Mischung zugemischt werden kann. Die erfindungsgemäße Kautschukmischung kann, muß aber nicht Ruß enthalten. Geeignet sind dabei die handelsüblichen und üblicherweise in Kautschukmischungen für Laufstreifen eingesetzten Ruße, die dem Fachmann bekannt sind. Der Rußanteil beträgt dabei bevorzugt bis zu 70 Gewichtsteile, bezogen auf 100 Gewichtsteile Kautschuk in der Mischung.

Die erfindungsgemäße Kautschukmischung enthält ferner die üblichen Mischungsbestandteile, wie Zinkoxid, Stearinsäure, Alterungsschutzmittel, Wachs, ggf.

Verarbeitungshilfen, ggf. Klebrigmacher, Schwefel, Beschleuniger und Verzögerer in den für Laufstreifenmischungen üblichen Gewichtsteilen.

Die vorliegende Erfindung betrifft weiters Reifen, deren Laufstreifen zumindest zum Teil aus der vulkanisierten erfindungsgemäßen Kautschukmischung bestehen.

Die Erfindung wird nun anhand von Ausführungsbeispielen, die in den nachfolgenden Tabellen 1, 2 und 3 zusammengefaßt sind, näher beschrieben.

Sämtliche Tabellen enthalten Mischungsbeispiele, wobei die angegebenen Zahlenwerte Gewichtsteile sind, die auf 100 Gewichtsteile Kautschuk in der Mischung bezogen sind. In einigen Mischungsrezepturen wurden ölverstreckte Kautschuktypen eingesetzt, der Gesamtanteil dieser Polymere enthält demnach auch den Ölanteil, welcher jeweils gesondert angegeben ist, und übersteigt daher die Zahl 100.

Die Herstellung der Kautschukmischungen erfolgte in an sich bekannter Weise, indem vorerst in einer ersten Mischstufe die Kautschukkomponenten, gegebenenfalls ein Teil des Rußes, gegebenenfalls mit Silan vermengtes Kieselsäuregranulat, gegebenenfalls der Esterweichmacher und ein Teil des aromatischen Mineralöles in einem Mischer geknetet wurden. In einer nächsten Mischstufe erfolgte das Einmischen des restlichen Rußanteiles, falls vorgesehen, ferner des Anteiles an Zinkoxid, Stearinsäure, Alterungsschutzmittel und des restlichen Teiles des Mineralöles. In einer weiteren Mischstufe wurde schließlich das Vulkanisationssystem bestehend aus Beschleuniger und Schwefel beigemengt.

Mit sämtlichen Mischungsrezepturen wurden Laufstreifenmischungen erstellt und bei der Herstellung von PKW-Reifen der Dimension 225/60 R 16 oder der Dimension 195/65 R 15 eingesetzt. Diese Reifen wurden bezüglich Traktion auf Eis- und Schneefahrbahnen, Blockierbremsen auf Eis, Bremsverhalten auf Schnee sowie auf nassem Asphalt und nassem Beton für Fahrzeuge mit einem Antiblockiersystem (ABS) geprüft.

Zur Ermittlung des Rollwiderstandes erfolgte jeweils eine Messung des Antriebsmomentes auf einer 2 Meter Prüftrommel, es ist der Durchschnitt der Werte bei 60, 90, 120, 140 und 160 km/h angegeben.

Die in den Tabellen angegebenen Zahlenwerte sind Kennzahlen, die sich jeweils auf eines der Vergleichsbeispiele, deren ermittelte Testwerte sämtlich 100 gesetzt wurden, beziehen, wobei Werte größer 100 eine Verbesserung bedeuten.

Tabelle 1 enthält zwei Beispiele von Mischungsrezepturen, und zwar ein Vergleichsbeispiel 1 und ein Testbeispiel 1, welches in Übereinstimmung mit der vorliegenden Erfindung erstellt wurde. In beiden Mischungsbeispielen wurde der gleiche Polymerverschnitt, bestehend aus einem in Emulsion hergestellten Styrolbutadiencopolymer (E-SBR 1712) einem in Lösung hergestellten Styrolbutadiencopolymer (Buna VSL 1940 S20) und einem Butadienkautschuk (BR) eingesetzt. Sowohl das in Emulsion hergestellte Styrolbutadiencopolymer als auch das in Lösung hergestellte Styrolbutadiencopolymer sind ölverstreckte Kautschuktypen. Die Mischungsrezeptur nach Vergleichsbeispiel 1 enthält ein Kieselsäuregranulat und ein X50S (enthält Silan-Kupplungsmittel und Ruß im Verhältnis 1:1). Die Mischungsrezeptur gemäß Testbeispiel 1 enthält neben X50S und dem Kieselsäuregranulat als Esterweichmacher Rapsöl in einem Anteil von 5 Gewichtsteilen. Rapsöl ist ein in der Natur vorkommendes Öl aus der Gruppe der Triglyceride von Fettsäuren.

Wie aus den Kennzahlen zu den einzelnen Tests der Reifeneigenschaften ersichtlich ist wurde mit Reifen, deren Laufstreifenmischungen gemäß Testbeispiel 1 erstellt wurden, eine sehr gute Balance zwischen den Wintereigenschaften, dem Naßbremsen und dem Rollwiderstand erzielt. Die gegenüber Reifen, deren Laufstreifenmischung gemäß Vergleichsbeispiel 1 erstellt wurde, erzielte Verbesserung, insbesondere was die Traktion auf Schnee und Eis und das Bremsverhalten auf Schnee und Eis betrifft, ist signifikant.

Tabelle 2 enthält zwei Beispiele, und zwar ein Vergleichsbeispiel 2 und ein Testbeispiel 2, bei welchen wiederum der verwendete Polymerverschnitt übereinstimmte. Dabei wurden Naturkautschuk, Butadienkautschuk (BR) und zwei Typen von Lösungs-Styrolbutadiencopolymer (Buna VSL 1940 S20, Buna VSL 1950 S20), beide ölverstreckt, eingesetzt. Sowohl das Vergleichsbeispiel 2 als auch das Testbeispiel 2 enthalten geringe Mengen von Ruß, jeweils 70 Gewichtsteile Kieselsäure sowie X50S, das Testbeispiel 2 enthält außerdem 7,5 Teile Rapsöl. Auch hier zeigte sich anhand von Testreifen mit Laufstreifenmischungen aus diesen beiden Mischungsrezepturen, daß jene Reifen mit einer Laufstreifenmischung gemäß Testbeispiel 2 gegenüber jenen, wo in der Laufstreifenmischung eine Mischung gemäß Vergleichsbeispiel 2 enthalten war, wesentlich bessere Werte hinsichtlich Schneetraktion, Eistraktion und Bremsverhalten auf Eis und Schnee erzielten.

Die Mischungsbeispiele in Tabelle 3 umfassen ein Vergleichsbeispiel 3 und ein Testbeispiel 3, bei welchen von der Polymerseite her jeweils Naturkautschuk und zwei Typen von Lösungs-Styrolbutadiencopolymeren (Cariflex S1210, Solprene 136) eingesetzt wurden. Beide Mischungen enthielten ferner 40 Gewichtsteile Ruß, jeweils 30 Gewichtsteile Kieselsäure und 8 Gewichtsteile X50S und aromatisches Mineralöl, das Testbeispiel 3 zudem den Esterweichmacher Triethylenglykol-dihexanoat. Auch hier zeigte der Vergleich von Reifen mit Laufstreifenmischungen aus diesen Mischungsrezepturen das Erreichen der bereits erwähnten Vorteile beim Einsatz einer erfindungsgemäß gestalteten Laufstreifenmischung.

Tabelle 1

| Beispiel | Vergleichsbeispiel 1 | Testbeispiel 1 |
|---|---|---|
| SBR 1712 | 61,9 | 61,9 |
| Buna VSL 1940 S 20 | 34,4 | 34,4 |
| BR | 30 | 30 |
| ❶ VN3 (Kieselsäure) | 70 | 70 |
| ❷ X50S (Aktivator) | 12,5 | 12,5 |
| Mineralöl aromatisch | 10 | 5 |
| Mineralöl aromatisch Summe | 36 | 31 |
| ❸ Rapsöl | | 5 |
| | | |
| Reifen 225/60 R 16 | | |
| Traktion Schnee | 100 | 120 |
| ABS – Bremsen – Schnee | 100 | 103 |
| Traktion Eis | 100 | 106 |
| Blockierbremsen Eis | 100 | 101 |
| ABS – Bremsen Naß Asphalt | 100 | 100 |
| ABS – Bremsen Naß Beton | 100 | 100 |
| Rollwiderstand | 100 | 100 |

❶ Handelsprodukt der Fa. Degussa

❷ Handelsprodukt der Fa. Degussa

❸ Rapsöl, roh, entwässert, Ölmühle Bruck/Leitha, Österreich

Tabelle 2

| Beispiel | Vergleichsbeispiel 2 | Testbeispiel 2 |
|---|---|---|
| Naturkautschuk | 10 | 10 |
| Buna VSL 1940 S 20 | 41,25 | 41,25 |
| Buna VSL 1950 S 25 | 41,25 | 41,25 |
| BR | 30 | 30 |
| N121 (Ruß) | 5 | 5 |
| ❶ VN3 (Kieselsäure) | 70 | 70 |
| ❷ X50S (Aktivator) | 12,5 | 12,5 |
| Mineralöl aromatisch | 7,5 | |
| Mineralöl aromatisch Summe | 30 | 22,5 |
| ❸ Rapsöl | | 7,5 |
| Reifen 225/60 R 16 | | |
| Traktion Schnee | 100 | 125 |
| ABS – Bremsen – Schnee | 100 | 105 |
| Traktion Eis | 100 | 108 |
| Blockierbremsen Eis | 100 | 102 |
| ABS – Bremsen Naß Asphalt | 100 | 99 |
| ABS – Bremsen Naß Beton | 100 | 99 |
| Rollwiderstand | 100 | 100 |

❶ Handelsprodukt der Fa. Degussa

❷ Handelsprodukt der Fa. Degussa

❸ Rapsöl, roh, entwässert, Ölmühle Bruck/Leitha, Österreich

Tabelle 3

| Beispiel | Vergleichsbeispiel 3 | Testbeispiel 3 |
|---|---|---|
| Naturkautschuk | 30 | 30 |
| Cariflex S1210 | 35 | 35 |
| Solprene 136 | 35 | 35 |
| N234 (Ruß) | 40 | 40 |
| ❶ VN3 (Kieselsäure) | 30 | 30 |
| ❷ X50S (Aktivator) | 8 | 8 |
| Mineralöl aromatisch | 41 | 36 |
| Triethylenglykol–dihexanoat | | 5 |
| | | |
| Reifen 195/65 R 15 | | |
| Traktion Schnee | 100 | 110 |
| ABS – Bremsen – Schnee | 100 | 102 |
| Traktion Eis | 100 | 102 |
| Blockierbremsen Eis | 100 | 101 |
| ABS – Bremsen Naß Asphalt | 100 | 99 |
| ABS – Bremsen Naß Beton | 100 | 100 |
| Rollwiderstand | 100 | 102 |

❶ Handelsprodukt der Fa. Degussa

❷ Handelsprodukt der Fa. Degussa

**Patentansprüche**

1. Kautschukmischung für den Laufstreifen eines Reifens auf der Basis zumindest eines Polymers A aus der Gruppe der Homopolymere und zumindest eines Polymers B aus der Gruppe der Copolymere basierend auf konjugiertem Dien und aromatischer Vinylverbindung, enthaltend feinverteilte, gefällte Kieselsäure als Füllmaterial, gegebenenfalls Ruß und ferner Weichmacher, dadurch gekennzeichnet, daß im Weichmacheranteil zumindest ein Weichmacher aus der Gruppe der Tieftemperatur-Weichmacher vom Estertyp enthalten ist.

2. Kautschukmischung nach Anspruch 1, dadurch gekennzeichnet, daß der Gesamtanteil an Weichmacher zwischen 10 und 60 Gewichtsteile, bezogen auf 100 Gewichtsteile Kautschuk in der Mischung, beträgt, wobei der Anteil an Weichmacher aus der Gruppe der Weichmacher vom Estertyp insbesondere 3 bis 35 Gewichtsteile beträgt.

3. Kautschukmischung nach Anspruch 1 oder Anspruch 2, dadurch gekennzeichnet, daß neben einem Weichmacher vom Estertyp zumindest einem Weichmacher aus der Gruppe der aromatischen Mineralöle enthalten ist.

4. Kautschukmischung nach einem der Ansprüche 1 bis 3, dadurch gekennzeichnet, daß der Weichmacher vom Estertyp ausgewählt ist aus den natürlichen Triglyceriden von Fettsäuren mit einer Jodzahl > 80 pflanzlichen oder tierischen Ursprungs.

5. Kautschukmischung nach Anspruch 4, dadurch gekennzeichnet, daß das Triglycerid von Rapsöl stammt.

6. Kautschukmischung nach Anspruch 4, dadurch gekennzeichnet, daß das Triglycerid von Rizinusöl stammt, wobei der Anteil an Rizinusöl bis zu 10 Gewichtsteile, bezogen auf 100 Gewichtsteile Kautschuk, beträgt.

7. Kautschukmischung nach einem der Ansprüche 1 bis 3, dadurch gekennzeichnet, daß der Weichmacher vom Estertyp ausgewählt ist aus der Gruppe der Weichmacher, die auf natürlich vorkommenden Fettsäuren oder Gemischen aus solchen und aliphatischen Alkoholen basieren.

8. Kautschukmischung nach Anspruch 7, dadurch gekennzeichnet, daß die natürlich vorkommende Fettsäure Ölsäure ist.

9. Kautschukmischung nach Anspruch 7, dadurch gekennzeichnet, daß das Gemisch aus natürlich vorkommenden Fettsäuren Rapsölfettsäure, Sojaölfettsäure oder Tallölfettsäuren umfaßt.

10. Kautschukmischung nach einem der Ansprüche 1 bis 3, dadurch gekennzeichnet, daß der Weichmacher vom Estertyp ausgewählt ist aus der Gruppe der Weichmacher, die auf synthetischen Säuren oder Gemischen aus solchen und aliphatischen Alkoholen basieren.

11. Kautschukmischung nach Anspruch 10, dadurch gekennzeichnet, daß die synthetische Säure synthetische Monocarbonsäure, insbesondere 2-Ethylhexancarbonsäure oder Benzeosäure, ferner Dicarbonsäuren, wie insbesondere Bernsteinsäure, Glutarsäure, Adipinsäure und Sebacinsäure, sowie Tri- und Polycarbonsäuren, insbesondere Zitronensäure, ist.

12. Kautschukmischung nach einem der Ansprüche 7 bis 11, dadurch gekennzeichnet, daß die aliphatischen Alkohole jene mit einer einzigen OH-Gruppe, insbesondere primäre unverzweigte Alkohole mit 1 bis 12 Kohlenstoffatomen sind.

13. Kautschukmischung nach einem der Ansprüche 7 bis 11, dadurch gekennzeichnet, daß die aliphatischen Alkohole jene mit zwei OH-Gruppen, beispielsweise Ethylenglycol, Diethylenglycol, Triethylenglycol, Tetraethylenglycol sowie Neopentylglycol und 1,4-Butandiol sind.

14. Kautschukmischung nach einem der Ansprüche 7 bis 11, dadurch gekennzeichnet, daß die aliphatischen Alkohole jene mit drei OH-Gruppen, insbesondere Trimethylenpropan oder Glycerin sind.

15. Kautschukmischung nach einem der Ansprüche 7 bis 11, dadurch gekennzeichnet, daß die aliphatischen Alkohole Polyole, insbesondere Pentaerythrit oder Dipentaerythrit sind.

16. Kautschukmischung nach Anspruch 10 oder Anspruch 13, dadurch gekennzeichnet, daß der Weichmacher vom Estertyp ein Weichmacher ist, der auf Dicarbonsäure mit Diolen basiert.

17. Kautschukmischung nach einem der Ansprüche 1 bis 16, dadurch gekennzeichnet, daß der Anteil der Polymere A 20 bis 80 Gewichtsteile und der Anteil der Polymere B 80 bis 20 Gewichtsteile, jeweils bezogen auf 100 Gewichtsteile Kautschuk in der Mischung, ist.

18. Kautschukmischung nach einem der Ansprüche 1 bis 17, dadurch gekennzeichnet, daß das Polymer A ausgewählt ist aus Naturkautschuk, synthetischem Polyisopren und Butadienkautschuk mit einem Vinylanteil < 30%.

19. Kautschukmischung nach einem der Ansprüche 1 bis 17, dadurch gekennzeichnet, daß das konjugierte Dien in Polymer B 1,3-Butadien oder Isopren oder ein Gemisch aus beiden ist.

20. Kautschukmischung nach einem der Ansprüche 1 bis 19, dadurch gekennzeichnet, daß die aromatische Vinylverbindung in Polymer B Styrol oder $\alpha$-Methylstyrol oder ein Gemisch aus beiden ist.

21. Kautschukmischung nach einem der Ansprüche 1 bis 20, dadurch gekennzeichnet, daß das molare Verhältnis von konjugiertem Dien zur aromatischen Vinylverbindung 95 : 5 bis 45 55, vorzugsweise 90 : 10 bis 55 : 45 beträgt.

22. Kautschukmischung nach einem der Ansprüche 1 bis 21, dadurch gekennzeichnet, daß das Copolymer ein Emulsions-Polymerisat oder ein LösungsPolymerisat ist.

23. Kautschukmischung nach einem der Ansprüche 1 bis 22, dadurch gekennzeichnet, daß zwei unterschiedliche Copolymere eines konjugierten Diens und einer aromatischen Vinylverbindung eingesetzt werden.

24. Kautschukmischung nach einem der Ansprüche 1 bis 23, dadurch gekennzeichnet, daß die zwei unterschiedlichen Copolymere entweder beide Lösungs-Polymerisate oder ein Lösungs-Polymerisat und ein Emulsions-Polymerisat sind.

25. Kautschukmischung nach einem der Ansprüche 1 bis 23, dadurch gekennzeichnet, daß der Anteil an feinverteilter, gefällter Kieselsäure 5 bis 100 Gewichtsteile, bezogen auf 100 Gewichtsteile Kautschuk in der Mischung, beträgt

26. Kautschukmischung nach einem der Ansprüche 1 bis 25, dadurch gekennzeichnet, daß die Kieselsäure mit einem Silankupplungsmittel, insbesondere mit einem schwefelhaltigen Silankupplungsmittel kombiniert ist, welche ausgewählt ist aus Bis (3-triethoxylsilylpropyl)-tetrasulfid, 3-Mercaptopropyltriethoxisilan und 3-Thiocyanatopropyltrimethoxysilan.

27. Kautschukmischung nach einem der Ansprüche 1 bis 26, dadurch gekennzeichnet, daß der Anteil an Silankupplungsmittel zwischen 0,2 bis 10 Gewichtsteilen, vorzugsweise 0,5 bis 7 Gewichtsteilen, bezogen auf 100 Gewichtsteile Kautschuk in der Mischung, beträgt.

28. Kautschukmischung nach einem der Ansprüche 1 bis 26, dadurch gekennzeichnet, daß sie Ruß in einem Anteil von bis zu 70 Gewichtsteilen, bezogen auf 100 Gewichtsteile Kautschuk in der Mischung, enthält.

29. Reifen, dessen Laufstreifen zumindest zum Teil aus einer vulkanisierten Kautschukmischung nach einer der Ansprüche 1 bis 28 besteht.

**Europäisches Patentamt**

# EUROPÄISCHER RECHERCHENBERICHT

Nummer der Anmeldung

EP 95 89 0076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 524 164 (SEMPERIT AG) 20.Januar 1993<br><br>* Zusammenfassung; Ansprüche; Beispiele; Tabellen *<br>* Seite 3, Zeile 3 - Zeile 12 *<br>----- | 1-5,<br>7-10,14,<br>17-22,<br>28,29 | C08K5/10<br>C08L21/00<br>B60C1/00 |

**RECHERCHIERTE SACHGEBIETE (Int.Cl.6)**

C08K

Der vorliegende Recherchenbericht wurde für alle Patentansprüche erstellt

| Recherchenort | Abschlußdatum der Recherche | Prüfer |
|---|---|---|
| DEN HAAG | 10.Juli 1995 | Mettler, R-M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument